# EUROPÄISCHE PATENTANMELDUNG

(11) **EP 1 217 867 A2**
(43) Veröffentlichungstag der Anmeldung: **26.06.2002**
(21) Anmeldenummer: 01440413.1
(22) Anmeldetag: 10.12.2001
(51) Int. Cl.: H04Q 11/04, H04Q 11/00

(54) **Optischer Crossconnect zum wahlfreien Verschalten von Nachrichtensignalen unterschiedlicher Multiplexebenen**

(30) Priorität: 23.12.2000 DE 10065000
(71) Anmelder: ALCATEL, 75008 Paris (FR)
(72) Erfinder: Beisel, Werner, 71638 Ludwigsburg (DE); Wettengel, Heinz, 71254 Ditzingen (DE); Hägele, Volker, Dr., 71384 Schorndorf (DE)
(74) Vertreter: Urlichs, Stefan, Dipl.-Phys.

(57) **Zusammenfassung**

Ein optischer Crossconnect (OCX), der zum Schalten sogenannter Optical Channels unterschiedlicher Multiplexebenen mit jeweils festgelegter Bitrate ausgebildet ist, besitzt eine Anzahl von Eingangs/Ausgangs-Anschlüssen (IO1 IO2, IO3) die jeweils angepaßt sind, Nachrichtensignale einer bestimmten Multiplexebene zu senden und zu empfangen. Der Crossconnect besitzt weiter für jede Multiplexebene eine eigene, an diese angepaßte Raum-Schaltmatrix (S1, S2, S3). Die einzelnen Schaltmatrizen (S1, S2, S3) sind über Multiplexer (MUX1, MUX2) miteinander verbunden. Nachrichtensignale, die zu einem Ausgang derselben Multiplexebene geschaltet werden sollen, werden direkt von der jeweiligen Schaltmatrix auf den betreffenden Ausgang geschaltet, während Nachrichtensignale, die zu einem Ausgang einer niedrigeren oder höheren Multiplexebene geschaltet werden sollen, zunächst von der jeweiligen Schaltmatrix an einen der Multiplexer geschaltet werden, wo sie gemultiplext bzw. gedemultiplext werden, dann an die Schaltmatrix der nächst höheren bzw. niedrigeren Multiplexebene weitergeleitet werden, welche die gemultiplexten bzw. entmultiplexten Nachrichtensignale dann zu dem betreffenden Eingang schaltet.

## Beschreibung

Die Erfindung betrifft einen optischen Crossconnect zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten.

In der optischen Nachrichtenübertragung werden derzeit synchrone optische Systeme eingesetzt, die in Europa als SDH (synchrone digitale Hierarchie) und in Nordamerika als SONET (synchronous optical network) bekannt sind. Bei diesen Systeme sind Nachrichtensignale unterschiedlicher Hierarchieebenen definiert, wobei Nachrichtensignale einer höheren Multiplexebene aus Nachrichtensignalen einer niedrigeren Multiplexebene zusammengesetzt sind oder direkt ein Nutzdatensignal enthalten. Die Multiplexhierarchie dieser Systeme ist in ITU-T G.707 Kapitel 6 definiert. Ein Überblick über diese Systeme wird z.B. in dem Artikel "SONET 101" der Fa. Nortel Networks dargestellt, der im Internet unter www.nortel.com/broadband/pdf/sonet 101 .pdf heruntergeladen werden kann.

In optischen Nachrichtenübertragungsnetzen werden Crossconnects eingesetzt, deren Aufgabe es ist, Pfade in dem Netz einzurichten. Dazu ist es erforderlich Multiplexeinheiten von jedem Eingang auf jeden Ausgang schalten zu können. Es sind sogenannte 4/3/1 Crossconnects wie z.B. der 1641SX der Firma Alcatel bekannt, die Multiplexeinheiten aller Hierarchieebenen (VC-4, VC3, VC-12 bei SDH) von jedem Eingang auf jeden Ausgang schalten können. Daneben gibt es noch sogenannte 4/4 Crossconnects wie z.B. den 1664SX der Fa. Alcatel, die dafür angepaßt sind, lediglich Multiplexeinheiten der höchsten Hierarchieebene (bei SDN VC-4) zu schalten. Kernstück dieser Crossconnects ist eine Raum/Zeit-Schaltmatrix, die mit allen Eingangs/Ausgangs-Anschlüssen verbunden ist. Bei den bekannten Systemen ist diese Schaltmatrix als dreistufige elektrische Schaltmatrix nach Clos ausgeführt (siehe Clos, "A Study of Non-Blocking Switching Networks", B.S.T.J. No. 32, 1953, pp. 406-424).

Daneben werden derzeit sogenannte optische Crossconnects entwickelt, die optische Nachrichtensignale beliebigen Formates wie SONET, ATM, IP schalten sollen. Sie enthalten eine zentrale Raum-Schaltmatrix, die für die zu schaltenden Nachrichtensignale transparent sein soll. Ein Beispiel für einen solchen optischen Crossconnect ist in dem Artikel "Cost Effective Optical Networks: The Role of Opticol Cross-Connects" von Charles A. Brackett angegeben, der im Internet von der Site www.tellium.com heruntergeladen werden kann.

Neuere Entwicklungen in der optischen Nachrichtenübertragung zielen darauf ab, Nachrichtensignale immer höherer Bitrate zu übertragen. So wird derzeit über eine neue Multiplexhierarchie mit der Bezeichnung "Optical Channel (OCh)" diskutiert. Diese neue Multiplexhierarchie soll Multiplexebenen mit Bitraten von 2,66 Gbit/sec sowie Vielfache davon (Faktor vier), nämlich 10,7x Gbit/sec und 43,x Gbit/sec aufweisen. Die zukünftigen Optical Channels sind besonders für die optische Nachrichtenübertragung im Wellenlängenmultiplex (WDM) vorgesehen.

Für diese Optical Channels werden ebenfalls Crossconnects benötigt, die Nachrichtensignale aller Hierarchieebenen von jedem Eingang zu jedem Ausgang schalten können. Für die Schaltmatrix solcher Crossconnects ist der Ansatz mit dreistufiger elektrischer Raum/Zeit-Matrix nach Clos aufgrund der hohen Bitrate mit vertretbarem Auswand nicht realisierbar. Optische Crossconnects mit transparenter Raum-Schaltmatrix hingegen sind nicht in der Lage, Anschlüsse für Nachrichtensignale einer höheren Multiplexebene mit Anschlüssen für Nachrichtensignale einer niedrigeren Multiplexebene zu verbinden. Anderseits sind solche optischen Crossconnects für die neuen Optical Channels bei weitem nicht kosteneffektiv.

Eine Aufgabe der Erfindung besteht deshalb darin, einen Crossconnect für Optical Channels anzugeben, der volle Konnetktivität für Nachrichtensignale aller Multiplexebenen unterstützt. Eine weitere Aufgabe der Erfindung besteht darin, ein Verfahren zum Schalten von Optical Channels unterschiedlicher Multiplexebenen anzugeben.

Die Aufgabe wird hinsichtlich des Crossconnects gelöst durch die Merkmale des Anspruchs 1 und hinsichtlich des Verfahrens durch die Merkmale des Anspruchs 7. Vorteilhafte Ausgestaltungen sind den abhängigen Ansprüchen zu entnehmen.

Die Erfindung hat den Vorteil, daß für Nachrichtensignale jeder Multiplexebene eine an die Bitrate angepaßte Schaltmatrix verwendet werden kann, daß der Crossconnect flexibel erweiterbar ist und hinsichtlich Kapazität und Anzahl der einzelnen Eingang/Ausgangs-Anschlüsse an die vorgesehene Verwendung angepaßt werden kann.

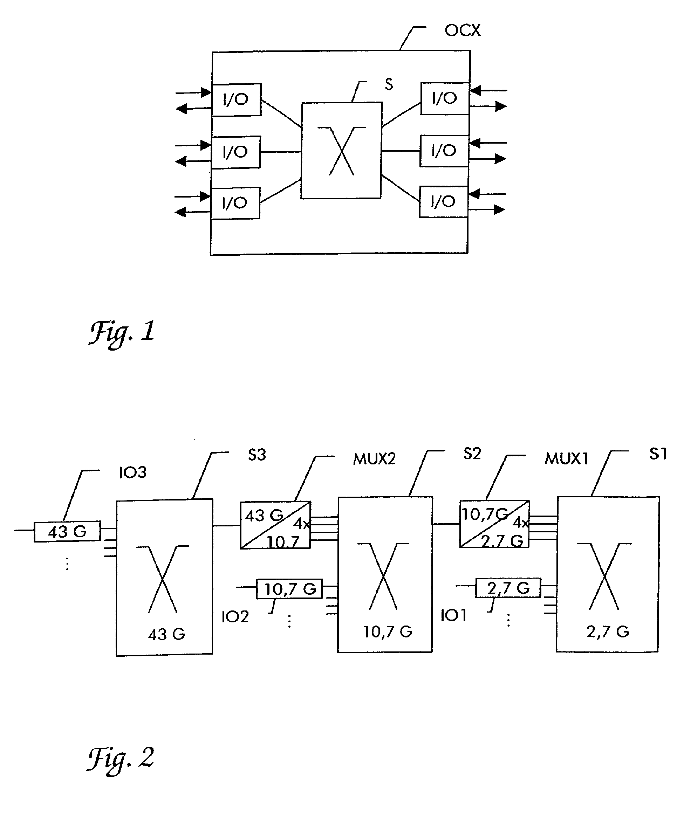

Im folgenden wird die Erfindung in einem Ausführungsbeispiel anhand der Figuren 1 und 2 näher erläutert. Es zeigt:
Figur 1: den schematischen Aufbau eines optischen Crossconnects und
Figur 2: den Aufbau des erfindungsgemäßen Crossconnects.

In Figur 1 ist das übliche Design eines Crossconnects OCX dargestellt. Er enthält eine Anzahl von optischen Eingangs/Ausgangs-Anschlüssen I/O, die alle mit einer Schaltmatrix S verbunden sind. Die Schaltmatrix S kann dadurch jeden Eingang auf jeden beliebigen Ausgang schalten. Bei bekannten 4/3/1 Crossconnects für SDH ist die Matrix eine Raum/Zeit-Schaltmatrix, die beliebige Multiplexeinheiten bis zur niedrigsten Multiplexebene von beliebigen Eingängen auf beliebige Ausgänge schalten kann. Bei bekannten optischen Crossconnects ist die Schaltmatrix eine für beliebige Signalformate transparente Raum-Schaltmatrix. Es können dabei jedoch nur gleichartige Eingänge auf gleichartige Ausgänge geschaltet werden. So würde es keinen Sinn machen, einen ATM-Eingang auf einen STM-64 Ausgang zu schalten und umgekehrt.

Entsprechend der Erfindung sind die Eingangs/Ausgangs-Anschlüsse I/O für Nachrichtensignale gemäß der Definition der Optical Channels (OCh) ausgelegt. Diese bauen auf einer Basisbitrate von 2,66 Gbit/sec auf, wobei höhere Multiplexebenen jeweils die vierfache Bitrate der Basisbitrate aufweisen. Nachrichtensignale einer höheren Multiplexebene werden durch byteweises Verschachteln von vier Nachrichtensignalen der jeweils nächst niedrigeren Multiplexebene gebildet oder enthalten direkt ein Nutzdatensignal. Beim Multiplexen von Nachrichtensignalen einer niedrigeren Multiplexebene zu einem Nachrichtensignal einer nächst höheren Multiplexebene wird byteweise gestopft, um Frequenzunterschiede der Teilsignale auszugleichen. Bislang sind zwei höhere Multiplexebenen vorgesehen mit Bitraten von 10,7x Gbit/sec und 43,x Gbit/sec. Die genaue Bitrate ist noch nicht endgültig festgelegt, so daß die Bitraten an der jeweils letzten gültigen Stelle mit x bezeichnet sind. Es ist davon auszugehen, daß zukünftig noch weitere, höhere Multiplexebenen festgelegt werden.

Ein Grundgedanke der Erfindung besteht darin, eine für jede Multiplexebene eine eigene, and diese angepaßte Raum-Schaltmatrix zu verwenden und die einzelnen Schaltmatrizen über Multiplexer zu verbinden. Nachrichtensignale, die zu einem Ausgang derselben Multiplexebene geschaltet werden sollen, werden direkt von der Schaltmatrix auf den betreffenden Ausgang geschaltet, während Nachrichtensignale, die zu einem Ausgang einer niedrigeren oder höheren Multiplexebene geschaltet werden sollen, zunächst von der Schaltmatrix an den Multiplexer geschaltet werden, wo sie gemultiplext bzw. gedemultiplext werden, dann an die Schaltmatrix der nächst höheren bzw. niedrigeren Multiplexebene weitergeleitet werden, welche die gemultiplexten bzw. entmultiplexten Nachrichtensignale dann dem betreffenden Eingang zuschaltet. Die Multiplexer dienen also dem Zusammenspiel zwischen den Multiplexebenen.

Ein solcher Crossconnect ist in Figur 2 dargestellt. Er weist eine Reihe von Eingangs/Ausgangs-Anschlüssen IO1, IO2, IO3 für optische Nachrichtensignale der unterschiedlichen Multiplexebenen auf. Die Eingangs/Ausgangs-Anschlüsse des Crossconnects lassen sich in drei Gruppen unterteilen: eine erste Gruppe von Anschlüssen IO1 für Nachrichtensignale der untersten Multiplexebene mit einer Bitrate von 2,66 Gbit/sec, eine zweite Gruppe von Anschlüssen IO2 für Nachrichtensignale der zweiten Multiplexebene mit einer Bitrate von 10,7x Gbit/sec sowie eine dritte Gruppe von Anschlüssen für Nachrichtensignale der höchsten Multiplexebene mit einer Bitrate von 43,x Gbit/sec.

Eine erste Schaltmatrix S1 ist zum Schalten von Nachrichtensignalen der untersten Multiplexebene mit einer Bitrate von 2,66 Gbit/sec vorgesehen und angepaßt. An diese erste Schaltmatrix S1 sind die Eingangs/Ausgangs-Anschlüsse der ersten Gruppe IO1 für Nachrichtensignale der untersten Multiplexebene angeschlossen. Desweiteren enthält der Crossconnect eine zweite Schaltmatrix für Nachrichtensignale der zweiten Multiplexebene und eine Schaltmatrix S3 für Nachrichtensignale der dritten, höchsten Multiplexebene. An die zweite Schaltmatrix S2 sind die Eingangs/Ausgangs-Anschlüsse der zweiten Gruppe IO2 für Nachrichtensignale der zweiten, mittleren Multiplexebene angeschlossen und an die dritte Schaltmatrix S3 sind die Eingangs/Ausgangs-Anschlüsse der dritten Gruppe IO3 für Nachrichtensignale der dritten, höchsten Multiplexebene angeschlossen. Zudem ist die erste Schaltmatrxi S1 über einen ersten Multiplexer MUX1 mit der zweiten Schaltmatrix S2 verbunden und die zweite Schaltmatrix ist über einen zweiten Multiplexer MUX2 mit der dritten Schaltmatrix verbunden.

Der erste Multiplexer MUX1 ist zum Multiplexen und entsprechenden Demultiplexen von Nachrichtensignalen der untersten Multiplexebene in Nachrichtensignale der zweiten, mittleren Multiplexebene vorgesehen. Der zweite Multiplexer MUX2 ist zum Multiplexen und entsprechenden Demultiplexen von Nachrichtensignalen der zweiten Multiplexebene in Nachrichtensignale der höchsten Multiplexebene vorgesehen. Beide Multiplexer weisen jeweils vier Anschlüsse für Nachrichtensignale der jeweils niedrigeren Multiplexebene auf sowie einen Anschluß für Nachrichtensignale der höheren Multiplexebene. Die vier niederbitratige Anschlüsse sind jeweils mit Anschlüssen der Raum-Schaltmatrix der niedrigeren Multiplexebene verbunden und der hochbitratige Anschluß ist jeweils mit einem Anschluß der Schaltmatrix der höheren Multiplexebene verbunden.

Die Funktion des Crossconnects ist folgende: Jede Schaltmatrix schaltet Verbindungen für Nachrichtensignale auf ihrer Multiplexebene zwischen beliebigen Anschlüssen der Matrix. Der Schaltzustand jeder Matrix wird dabei von einer nicht gezeigten Steuerungseinrichtung über ein Netzwerkmanagementsystem bestimmt.

An den Anschlüssen der ersten Gruppe IO1 werden Nachrichtensignale mit einer Bitrate von 2,66 Gbit/sec empfangen. Soll ein Nachrichtensignal von einem solchen Anschluß auf einen gleichartigen Anschluß derselben Gruppe IO1 geschaltet werden, so schaltet die Schaltmatrix S1 dieses Nachrichtensignal direkt auf den betreffenden Anschluß. Ebenso werden Nachrichtensignale an den Anschlüssen der Gruppen IO2 und IO3 von der daran jeweils angeschlossenen Schaltmatrix S2, S3 direkt zu den betreffenden Ausgängen geschaltet, wenn diese derselben Gruppe angehören. Anderenfalls muß eine Umsetzung in einem der Multiplexer MUX1, MUX2 erfolgen.

Es wird nun beispielhaft der Fall angenommen, daß ein Nachrichtensignal der untersten Multiplexebene (2,66 Gbit/sec) von einem Anschluß der ersten Gruppe IO1 zu einem Anschluß der zweiten Gruppe IO2 geschaltet werden soll. Dazu wird das 2,66 Gbit/sec Nachrichtensignal von der Schaltmatrix zu dem ersten Multiplexer MUX1 geschaltet. Wie bereits erwähnt hat der Multiplexer MUX1 vier Anschlüsse für Nachrichtensignale der untersten Multiplexebene und einen Anschluß für Signale der mittleren Multiplexebene. Der Multiplexer verschachtelt die an den vier Anschlüssen der untersten Multiplexebene empfangenen Nachrichtensignale byteweise zu einem Nachrichtensignal der mittleren Multiplexebene und leitet dieses weiter an die Schaltmatrix S2. Dieses verschachtelte Nachrichtensignal wird dann von der Schaltmatrix S2 zu dem betreffenden Ausgang der mittleren Multiplexebene geschaltet. Ist das beispielhaft beschriebene 2,66 Gbit/sec Nachrichtensignal das einzige Nachrichtensignal, welches auf den betreffenden Ausgang geschaltet werden soll, so verschachtelt der Multiplexer dieses mit drei Leersignalen um das Nachrichtensignal der mittleren Multiplexebene zu bilden.

Alle Schaltzustände der drei Schaltmatrizen S1, S2, S3 und die Arbeitsweise der Multiplexer MUX1 und MUX2 sind bidirektional. So kann beispielweise auch ein Nachrichtensignal von einem Anschluß der mittleren Multiplexebene über die Schaltmatrix S2 zu dem entsprechenden Anschluß des ersten Multiplexers MUX1 geschaltet werden. Dieser demultiplext das Signal in vier Nachrichtensignale der untersten Multiplexebene und leitet diese an die Schaltmatrix S1 weiter. Die Schaltmatrix S1 schaltet diese vier Nachrichtensignale dann zu vier verschiedenen Anschlüssen der ersten Gruppe IO1.

Soll ein Nachrichtensignal der untersten Multiplexebene von einem Anschluß der ersten Gruppe IO1 zu einem Anschluß der dritten Gruppe IO3 geschaltet werden, so wird es von der ersten Schaltmatrix S1 zunächst zu dem ersten Multiplexer MUX1 geschaltet: Dieser bildet dann mit drei weiteren Nachrichtensignalen oder eventuell auch mit Leersignalen ein Nachrichtensignal der mittleren Multiplexebene, das dann an die zweite Schaltmatrix S2 weitergeleitet wird. Die zweite Schaltmatrix S2 schaltet des gemultiplexte Nachrichtensignal der mittleren Multiplexebene dann zu dem zweiten Multiplexer MUX2, der daraus wiederum mit drei weiteren Nachrichtensignalen der mittleren Multiplexebene oder gegebenenfalls mit Leersignalen ein Nachrichtensignal der höchsten Multiplexebene bildet, indem er die vier Signale byteweise verschachtelt. Das so gebildete Nachrichtensignal der höchsten Multiplexebene wird dann von der Schaltmatrix S3 auf den betreffenden Ausgang der dritten Gruppe geschaltet.

Die Schaltmatrizen S1, S2, S3 können entweder als elektrische Schaltmatrizen, als optische Schaltmatrizen oder auch als Kombination von beiden ausgeführt werden. So ist es vorteilhaft, die erste und zweite Schaltmatrix S1, S2 jeweils als elektrische Schaltmatrix auszuführen und die dritte Schaltmatrix S3 als optische Schaltmatrix. Im Falle, daß die dritte Schaltmatrix als elektrische Schaltmatrix ausgeführt werden soll, ist diese vorteilhaft für parallele Signalverarbeitung ausgelegt, d.h. sie enthält beispielweise acht parallele Pfade für die acht Bits eines jeden Bytes der zu schaltenden Nachrichtensignale. Dies ist erforderlich, daß sich mit den derzeit modernsten auf Basis von SiGe-Technologie hergestellten integrierten Halbleiterschaltungen Schaltmatrizen für maximal 20 Gbit/sec aufbauen lassen. Eine optische Schaltmatrix kann beispielsweise unter Verwendung kleiner Spiegel sogenannter Micro-Mirrors aufgebaut werden.

Die Verwendung von zwei Multiplexern soll keine Beschränkung für die Erfindung darstellen. Vielmehr können auch mehrere gleichartige Multiplexer gleichzeitig zwischen zwei Schaltmatrizen S1 und S2 oder S2 und S3 angeschlossen sein. Dies ist bei großen Schaltmatrizen mit einer Schaltkapazität von mehreren Dutzend Nachrichtensignalen vorteilhaft, damit gleichzeitig mehrere Vierergruppen von Anschlüssen einer unteren Multiplexebene mit Anschlüssen einer höheren Multiplexebene verbunden werden können.

Vorteilhaft ist der erfindungsgemäße Crossconnect modular in Form von Steckkarten aufgebaut. Dadurch kann er flexibel erweitert werden, z.B. durch hinzufügen weiterer Multiplexer-Steckkarten und Matrixsteckkarten.

## Patentansprüche

1. Optischer Crossconnect (OCX) zum Schalten von Verbindungen in einem optischen Übertragungsnetz, in dem optische Nachrichtensignale unterschiedlicher Multiplexebenen mit jeweils festgelegter Bitrate gesendet werden können, wobei Nachrichtensignale einer höheren Multiplexebene aus Nachrichtensignalen einer niedrigeren Multiplexebene zusammengesetzt sind oder direkt ein Nutzdatensignal enthalten; wobei der Crossconnect eine Anzahl von Eingangs/Ausgangs-Anschlüssen (IO1, IO2, IO3) enthält, die jeweils angepaßt sind, Nachrichtensignale einer bestimmten Multiplexebene zu senden und zu empfangen,
**dadurch gekennzeichnet, daß**
- für jede Multiplexebene eine eigene Schaltmatrix (S1, S2, S3) vorgesehen ist, die angepaßt ist, Nachrichtensignale der jeweiligen Multiplexebene zu schalten und die mit den Eingangs/Ausgangs-Anschlüssen (IO1, IO2, IO3) dieser Multiplexebene verbunden ist, und daß
- jede Schaltmatrix über jeweils zumindest einen Multiplexer (MUX1, MUX2) mit der Schaltmatrix der nächsthöheren Multiplexebene verbunden ist, wobei der Multiplexer (MUX1, MUX2) angepaßt ist, eine Anzahl von der Schaltmatrix (S1, S2) der niedrigeren Multiplexebene empfangener Nachrichtensignale zu einem Nachrichtensignal einer nächst höheren Multiplexebene zu multiplexen und dieses an die Schaltmatrix (S2, S3) der nächsthöheren Multiplexebene weiterzuleiten, sowie ein von der Schaltmatrix (S2, S3) einer höheren Multiplexebene empfangenes Nachrichtensignal in eine Anzahl Nachrichtensignale einer nächst niedrigeren Multiplexebene zu demultiplexen und diese einzeln an die Schaltmatrix (S1, S2) der nächst niedrigeren Multiplexebene weiterzuleiten.

2. Optischer Crossconnect (OCX) nach Anspruch 1, bei dem die Schaltmatrizen transparente Raumschaltmatrizen sind.

3. Optischer Crossconnect (OCX) nach Anspruch 2, bei dem zumindest eine Schaltmatrix eine optische Raumschaltmatrix ist.

4. Optischer Crossconnect (OCX) nach Anspruch 2, bei dem zumindest eine Schaltmatrix eine elektrische Raumschaltmatrix ist.

5. Optischer Crossconnect (OCX) nach Anspruch 1, bei dem jeweils Anschlüsse für eine niedrigste Hierarchieebene mit einer Bitrate von 2,66 Gbit/sec und zwei höhere Hierarchieebenen mit jeweils einem Vierfachen der Bitrate der nächst niedrigen Hierarchieebene vorgesehen sind und bei dem zwei Multiplexer die drei Schaltmatrizen (S1, S2, S3) für die drei Hierarchieebenen verbinden, wobei der erste Multiplexer (MUX1) angepaßt ist vier Nachrichtensignale der niedrigsten Hierarchieebene zu einem Nachrichtensignal der mittleren Hierarchieebene zu multiplexen und umgekehrt und wobei der zweite Multiplexer (MUX2) angepaßt ist vier Nachrichtensignale der mittleren Hierarchieebene zu einem Nachrichtensignal der höchsten Hierarchieebene zu multiplexen und umgekehrt.

6. Optischer Crossconnect (OCX) nach Anspruch 1, bei dem die Baugruppen modular in Form von Steckkarten ausgeführt sind.

7. Verfahren zum Schalten von optische Nachrichtensignale unterschiedlicher Multiplexebenen mit jeweils festgelegter Bitrate, wobei Nachrichtensignale einer höheren Multiplexebene aus Nachrichtensignalen einer niedrigeren Multiplexebene zusammengesetzt sind oder direkt ein Nutzdatensignal enthalten, mit den Schritten:
- Empfangen eine optischen Nachrichtensignal;
- Feststellen der Hierarchieebene des Nachrichtensignals;
- Zuleiten des Nachrichtensignals an eine Schaltmatrix (S1, S2, S3), die eigens für diese Hierarchieebene angepaßt ist;
- Feststellen zu welchem Ausgang das Nachrichtensignal geschaltet werden soll;
- für den Fall, daß das Nachrichtensignal zu einem Ausgang geschaltet werden soll, der dieselbe Hierarchieebene unterstützt, Schalten des Nachrichtensignals zu dem betreffenden Ausgang und
- für den Fall, daß das Nachrichtensignal zu einem Ausgang geschaltet werden soll, der eine höhere Hierarchieebene unterstützt,
- Schalten des Nachrichtensignals zu einem ersten Multiplexer (MUX1, MUX2);
- Multiplexen des Nachrichtensignals zu einem Nachrichtensignal der höheren Hierarchieebene
- Weiterleiten des gemultiplexten Nachrichtensignals an die zweite Schaltmatrix, die für Nachrichtensignale der höheren Hierarchieebene angepaßt ist, und
- Schalten des Nachrichtensignals zu dem betreffenden Ausgang; und
- für den Fall, daß das Nachrichtensignal zu einem Ausgang geschaltet werden soll, der eine niedrigere Hierarchieebene unterstützt,
- Schalten des Nachrichtensignals zu einem zweiten Multiplexer (MUX1, MUX2);
- Demultiplexen des Nachrichtensignals zu Nachrichtensignalen der niedrigeren Hierarchieebene
- Weiterleiten der demultiplexten Nachrichtensignale an eine dritte Schaltmatrix, die für Nachrichtensignale der niedrigeren Hierarchieebene angepaßt ist, und
- Schalten eines der demultiplexten Nachrichtensignale zu dem betreffenden Ausgang.
